(19) Europäisches Patentamt
European Patent Office
Office européen des brevets

(11) **EP 4 765 801 A1**

(12) **EUROPEAN PATENT APPLICATION**

(43) Date of publication:
**24.06.2026 Bulletin 2026/26**

(21) Application number: **24315590.0**

(22) Date of filing: **19.12.2024**

(51) International Patent Classification (IPC):
*H04N 19/105* (2014.01)    *H04N 19/11* (2014.01)
*H04N 19/176* (2014.01)    *H04N 19/593* (2014.01)

(52) Cooperative Patent Classification (CPC):
H04N 19/176; H04N 19/105; H04N 19/11;
H04N 19/593

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Beijing Xiaomi Mobile Software Co., Ltd.**
**Beijing Beijing 100085 (CN)**

(72) Inventors:
• **Abdoli, Mohsen**
**Beijing, 100085 (CN)**
• **Tissier, Alexandre**
**Beijing, 100085 (CN)**
• **Ghaznavi Youvalari, Ramin**
**Beijing, 100085 (CN)**
• **Plowman, Frank**
**Beijing, 100085 (CN)**

(74) Representative: **Zimmermann, Tankred Klaus**
**Schoppe, Zimmermann, Stöckeler**
**Zinkler, Schenk & Partner mbB**
**Patentanwälte**
**Radlkoferstrasse 2**
**81373 München (DE)**

(54) **BI-DIRECTIONAL INTRA PREDICTION**

(57)    A method of processing one or more blocks of a picture predicts a block of the picture by combining a first prediction using a first angular intra prediction mode (IPM) and a second prediction using a second angular IPM. Each angular IPM is mapped to an intra angle. The first angular IPM is associated with a first intra angle equal to or greater than 180° or equal to or less than 90°, and the second angular IPM is associated with a second intra angle shifted by a predefined angle relative to the first intra angle. The first prediction is obtained by applying the first angular IPM on one or more reference samples on a first side of the block, and the second prediction is obtained by applying the second angular IPM on one or more reference samples on a second side of the block.

predicting a block of the picture by combining a first prediction using a first angular intra prediction mode (IPM) and a second prediction using a second angular IPM

the first angular IPM is associated with a first intra angle equal to or greater than 180° or equal to or less than 90°

the second angular IPM is associated with a second intra angle shifted by a predefined angle relative to the first intra angle

the second prediction is obtained by applying the second angular IPM on one or more reference samples on a second side of the block

the first prediction is obtained by applying the first angular IPM on one or more reference samples on a first side of the block

S100

Fig. 7

EP 4 765 801 A1

## Description

### Technical Field

The present disclosure generally relates to the field of encoding/decoding pictures, images or videos, and embodiments of the present disclosure concern improvements regarding a prediction. More specific embodiments of the present disclosure relate to the processing a picture using combined predictions.

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For encoding and decoding of a picture, an angular intra prediction may overlook useful texture information from certain reconstructed areas or blocks neighboring the currently processed block so that the prediction performance may not be optimal.

Thus, there is a need to provide further improvements for processing a picture, an image or a video using an angular intra prediction, e.g., when encoding and/or decoding of the picture, the image or the video.

### Summary

The present disclosure provides a method of processing one or more blocks of a picture, the method comprising:

predicting a block of the picture by combining a first prediction using a first angular intra prediction mode (IPM) and a second prediction using a second angular IPM,
wherein each angular IPM is mapped to an intra angle, the first angular IPM is associated with a first intra angle equal to or greater than 180° or equal to or less than 90°, and the second angular IPM is associated with a second intra angle shifted by a predefined angle relative to the first intra angle, and
wherein the first prediction is obtained by applying the first angular IPM on one or more reference samples on a first side of the block, and the second prediction is obtained by applying the second angular IPM on one or more reference samples on a second side of the block.

Optionally, the method further comprises:

- obtaining the first angular IPM associated with the first intra angle,
- shifting the first intra angle by the predefined angle, e.g., by 180°, for obtaining the second intra angle, and
- selecting an angular IPM associated with the second intra angle as the second angular IPM.

Optionally,

- when the block is not a wide angle block, like a square block, the first intra angle is equal to or greater than 180° and equal to or less than 225°, and the second intra angle is equal to or less than 45° and equal to or greater than 0°, and/or
- when the block is a wide angle block, like a non-square block, the first intra angle is equal to or less than 45° and equal to or greater than 0°, and the second intra angle is equal to or greater than 180° and equal to or less than 225°.

Optionally,

- when the first intra angle is equal to or greater than 180°, the first side of the block is left of the block, and the second side is above the block, and/or
- when the first intra angle equal to greater or less than 90°, the first side of the block is above the block, and the second side is left of the block.

Optionally, the block has a width W and a height H, and

- when the block is not a wide angle block, like a square block, a reference line including the reference samples on the first side has a length of W, and a reference line including the reference samples on the second side has a length of H, and/or

- when the block is a wide angle block, like a non-square block, a reference line including the reference samples on the first side has a length of 2W+1, and a reference line including the reference samples on the second side has a length of 2H+1.

Optionally, the first prediction and the second prediction are combined by fusing, wherein the first prediction and the second prediction are fused by a linear combination using

- a block-level weighting applying the same fusion weights for all pixels within the block, or
- a pixel-level weighting applying location-dependent fusion weights.

Optionally,

when using the block-level weighting, a fusion function for a pixel position ($x$, y) is as follows:

$$Pred_f^{x,y} = \frac{\omega_s Pred_p^{x,y} + \omega_p Pred_s^{x,y}}{\omega_p + \omega_s},$$

with

$Pred_p^{x,y}$     first prediction of pixel position ($x$, $y$),

$Pred_s^{x,y}$     second prediction of pixel position ($x$, $y$),

$\omega_p$     fusion weight of the first prediction for the block including pixel position ($x$, $y$),

$\omega_s$     fusion weight of the second prediction for the block including pixel position ($x$, $y$), and
when using the pixel-level weighting, a fusion function for a pixel position ($x$, $y$) is as follows:

$$Pred_f^{x,y} = \frac{\omega_s^{x,y} Pred_p^{x,y} + \omega_p^{x,y} Pred_s^{x,y}}{\omega_p^{x,y} + \omega_s^{x,y}},$$

with

$Pred_p^{x,y}$     first prediction of pixel position ($x$, $y$),

$Pred_s^{x,y}$     second prediction of pixel position ($x$, $y$),

$\omega_p^{x,y}$     fusion weight of the first prediction for the pixel position ($x$, $y$),

$\omega_s^{x,y}$     fusion weight of the second prediction for the pixel position ($x$, $y$).

Optionally, the fusion weights are fixed.
Optionally, the fusion weights vary from one block to another block, and a change in the fusion weights may be determined by an explicit signaling using at least one syntax element signaled in a data stream to indicate how the weights are adapted, e.g., by signaling a syntax element indicating a relative weight of the first prediction to the second prediction.
Optionally, the fusion weights vary from one block to another block, and wherein

- the fusion weight for the first prediction is determined using a distance between the first side of the block and the pixel position ($x$, $y$), and the fusion weight for the second prediction is determined using a distance between the second side of the block and the pixel position ($x$, $y$), or
- the fusion weights for the first prediction and for the second prediction are determined using template-based distortions of the first and second predictions.

Optionally, predicting the block by combining the first prediction and the second prediction is enabled or disabled responsive to one or more of the following factors:

- an availability of a sufficient number of reference samples, wherein combining the first prediction and the second prediction is disabled when the number of reference samples on the first and/or second side of the block is below a predefined threshold,

- the first intra angle, wherein combining the first prediction and the second prediction is disabled when the first angular IPM is within a predefined range around a horizontal or vertical angular IPM,
- an aspect ratio of the block, wherein combining the first prediction and the second prediction is disabled when the aspect ratio of the block is below a predefined threshold, e.g., when the block is a thin rectangle.

Optionally, predicting the block by combining the first prediction and the second prediction is controlled at one of a plurality of different processing levels.

Optionally, the plurality of different processing levels comprise:

- a sequence-level at which the prediction of the block by combining the first prediction and the second prediction is enabled/disabled for all coding units (CUs) in all coding tree units (CTUs) of all frames of a video content, e.g., responsive to a signaling using a High Level Syntax (HLS), like a Sequence Parameter Set, SPS, flag,
- a frame- or picture-level at which the prediction of the block by combining the first prediction and the second prediction is enabled/disabled for all coding units (CUs) of all coding tree units (CTUs) in the frame/picture, e.g., responsive to a signaling using a High Level Syntax (HLS), like a Sequence Parameter Set, SPS, flag,
- a block- or CU-level at which the prediction of the block by combining the first prediction and the second prediction is enabled/disabled for each individual coding unit (CU) or block.

The present disclosure provides a non-transitory computer-readable storage medium comprising instructions which, when executed by a computer, cause the computer to carry out the inventive method.

The present disclosure provides an apparatus of processing one or more blocks of a picture, the apparatus comprising:

a processing module, wherein the processing module is configured to predict a block of the picture by combining a first prediction using a first angular intra prediction mode (IPM) and a second prediction using a second angular IPM, wherein each angular IPM is mapped to an intra angle, the first angular IPM is associated with a first intra angle equal to or greater than 180° or equal to greater or less than 90°, and the second angular IPM is associated with a second intra angle shifted by a predefined angle relative to the first intra angle, and

wherein the first prediction is obtained by applying the first angular IPM on one or more reference samples on a first side of the block, and the second prediction is obtained by applying the second angular IPM on one or more reference samples on a second side of the block.

The technical solutions provided according to embodiments of the present disclosure have the following beneficial effects.

In a state-of-the-art angular intra prediction, when an intra prediction mode (IPM) index falls in the first or the fourth quadrants of angular intra prediction directions, only one of two reference lines, e.g., left of and on top/above a currently processed block, is used for a multi-tap reference projection. This may lead to a situation in which potentially useful texture information from the other reference line (reconstructed or reference blocks) may by overlooked so that the prediction performance may not be optimal.

Embodiments of the present disclosure address the shortcomings in the prior art by providing an angular intra prediction which; when the IPM index falls in the first or the fourth quadrants of angular intra prediction directions, uses both reference lines (reconstructed or reference blocks), e.g., left of and on top/above the currently processed block for the reference projection. 1st and 2nd predictions from the two reference lines are obtained and used for determining the angular prediction. The angular intra prediction of a block is obtained by combining the two predictions which, in turn, are obtained using 1st and 2nd angular intra prediction modes (IPMs). The 1st angular IPM has an IPM index with an intra angle in the first quadrant or first wide-angle quadrant (angle≥180°) or in the fourth quadrant or second wide-angle quadrant (angle≤90°). The first angle is shifted, e.g., by 180°, thereby obtaining a second intra angle, and the 2nd angular IPM, also referred to as an additional or shifted angular IPM, is the angular IPM having the IPM index with the second intra angle. Then the 1st and 2nd predictions are obtained by applying the 1st and 2nd angular IPMs to the 1st and 2nd sides of the block.

The present disclosure is advantageous because, other than in conventional approaches using in case of an intra angle≥180°/≤90° only one reference line, the additional or shifted angular IPM is used with the additional reference line for obtaining respective predictions which are then combined or fused, which avoids a situation overlooking potentially useful texture information from any reference line (reconstructed or reference blocks) so that the prediction performance is improved.

It is to be understood that the content described in this section is not intended to identify key or critical features of the embodiment of the present disclosure, nor is it intended to limit the scope of the present disclosure. Other features of the present disclosure become readily apparent from the following description.

## EP 4 765 801 A1

### Brief Description of the Drawings

The drawings are explanatory and serve to explain the present disclosure, and are not to be construed to limit the present disclosure to the illustrated embodiments.

| Fig. 1 | is a block diagram of a conventional video encoder, |
|---|---|
| Fig. 2 | is a block diagram of a conventional video decoder, |
| Fig. 3 | illustrates angular Intra Prediction Modes (IPMs) in VVC and ECM, |
| Fig. 4(A)-Fig. 4(B) | illustrate reference samples or blocks for a wide-angular intra prediction of a block a width W and a height H, |
| Fig. 5 | illustrates a problem of discontinuity in case of angular intra prediction directions beyond 45°, |
| Fig. 6(A)-Fig. 6(D) | illustrate definitions of reference samples for a position dependent intra prediction combination (PDPC) applied over different prediction modes, |
| Fig. 7 | illustrates a flow diagram of a method of processing one or more blocks of a picture in accordance with embodiments of the present disclosure, |
| Fig. 8 | illustrates a conditional process to determine a primary IPM and a secondary or shifted IPM dependent on a coded mode $M_c$ and a use of a wide-angle block, |
| Fig. 9 | illustrates a determination of a main reference line $Ref_{main}$ and a side reference line $Ref_{side}$ dependent on a direction (horizontal/vertical) of a principal mode $M_p$, |
| Fig. 10(A)-Fig. 10(B) | illustrate a determination of a first prediction signal and of a second prediction signal, |
| Fig. 11 | illustrates a flow diagram of a prediction process for a fusion block in accordance with embodiments of the present disclosure, |
| Fig. 12 | illustrates a flow diagram of a method for decoding an encoded data stream in accordance with embodiments of the present disclosure, |
| Fig. 13 | illustrates a flow diagram of a method for encoding a picture into an encoded data stream in accordance with embodiments of the present disclosure, |
| Fig. 14 | illustrates a block diagram of an apparatus of processing one or more blocks of a picture in accordance with embodiments of the present disclosure, |
| Fig. 15 | illustrates a block diagram of a decoder for decoding an encoded data stream in accordance with embodiments of the present disclosure, |
| Fig. 16 | illustrates a block diagram of an encoder for encoding a picture into an encoded data stream in accordance with embodiments of the present disclosure, |
| Fig. 17 | illustrates a data stream in accordance with embodiments of the present disclosure, and |
| Fig. 18 | illustrates a block diagram illustrating an electronic device according to embodiments of the present disclosure. |

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if', "when", "in case", "responsive to" may be used interchangeably.

*Standard Video Coder*

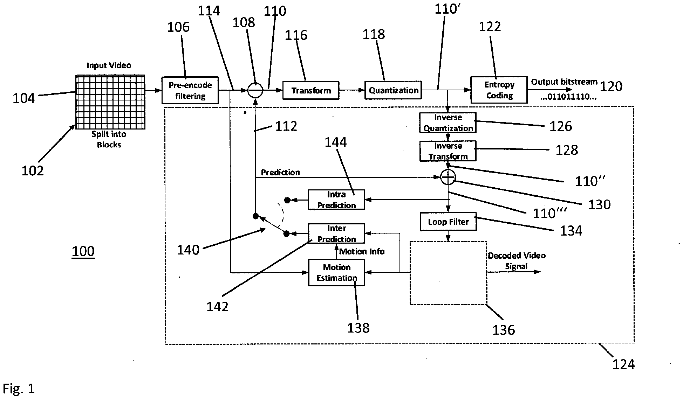

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110′′′ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110′′′. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

*Standard Video Decoder*

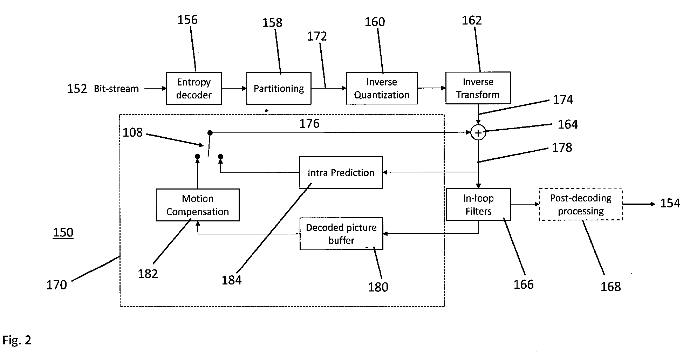

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

*Angular Intra Prediction Mode (IPM) in VVC and ECM*

There exists a set of 67 Intra Prediction Modes (IPMs) in both VVC and ECM, including two non-angular modes of DC and Planar (index 0 and 1), along with 65 angular modes (indexed as 2,3,..66). The initial set of 65 angular IPMs may be extended to so-called wide-angle modes (indexed as -14,-13,...,-1 and 67,68,...,80), depending on block characteristics such as width/height ratio.

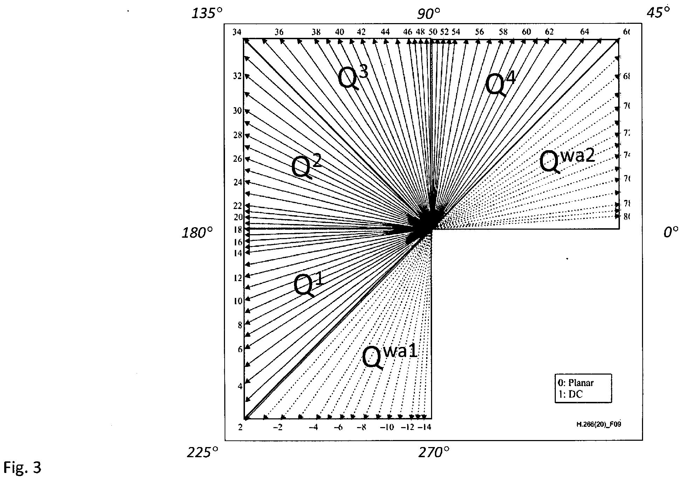

Fig 3 illustrates angular Intra Prediction Modes (IPMs) in VVC and ECM. In Fig. 3, the solid lines (indices) indicate non-wide-angle IPMs and the dashed lines (indices) indicate wide-angle IPMS. As is show in Fig. 3, the non-wide-angle IPMs cover an angle range of between 45 degrees and 225 degrees, while the wide-angle IPMs extend their extremes by 45 degrees from each side, i.e., cover an angle range between 0 and 45 degrees and between 225 and 270 degrees, respectively. Furthermore, one can divide the set of IPMs into four non-wide-angle quarters or quadrants $Q^1, Q^2, Q^3$ and $Q^4$ of angular intra prediction directions, as well as two wide-angle quarters or quadrants $Q^{wa1}$ and $Q^{wa2}$ of angular intra prediction directions.

*Wide-Angle Intra Prediction (WAIP)*

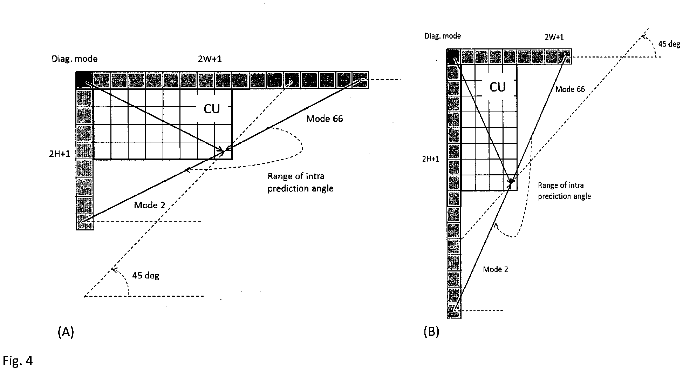

As illustrated in Fig. 3, each angular IPM is mapped to or is associated with an intra angle or angular intra prediction direction. Conventionally, angular intra prediction directions for the non-wide-angle IPMs (IPMs 2 to 66 in Fig. 3) are defined from -135 degrees (225° in Fig. 3) to +45 degrees (45° in Fig. 3) in a clockwise direction. Fig. 3 illustrates the IPM 66 which extends from a horizontal reference line above the currently processed block and is rotated downwards by -135 degrees relative to the horizontal reference line in the clockwise direction so as to extend from the horizontal reference line above the currently processed block towards the pixel to be predicted. Fig. 3 illustrates the IPM 2, which extends from a vertical reference line left the currently processed block and is rotated downwards by +45 degrees relative to the vertical reference line in the clockwise direction so as to extend from the vertical reference line left of the currently processed block towards the pixel to be predicted. In VVC, several conventional angular intra prediction modes may be adaptively replaced with wide-angle intra prediction modes for non-square blocks. The replaced modes are signaled using the original mode indices, which are remapped to the indices of the wide angular modes after parsing. The total number of intra prediction modes is unchanged, i.e., remain at 67, and the intra mode coding method remains also unchanged. Fig. 4(A) and Fig. 4(B) illustrate the reference samples or blocks for a wide-angular intra prediction of a currently processed block CU having a width W and a height H. To support these prediction directions, the top reference line having a length of 2W+1, and the left reference having a length of 2H+1 are defined as shown in Fig. 4(A) for a block CU having an aspect ratio W/H=1/2 and in Fig. 4(B) for a block CU having an aspect ratio W/H=2/1. Thus, the number of replaced modes in wide-angular direction mode depends on the aspect ratio of the block CU. Table 3 below illustrates replaced intra prediction modes dependent of the aspect ratio.

| Aspect ratio | Replaced intra prediction modes |
| --- | --- |
| W / H == 16 | Modes 2,3,4,5,6,7,8,9,10,11,12, 13,14,15 |
| W / H = 8 | Modes 2,3,4,5,6,7,8,9,10,11,12, 13 |
| W / H == 4 | Modes 2,3,4,5,6,7,8,9,10,11 |
| W / H == 2 | Modes 2,3,4,5,6,7,8,9 |
| W / H == 1 | None |
| W / H == 1/2 | Modes 59,60,61,62,63,64,65,66 |
| W / H == 1/4 | Mode 57,58,59,60,61,62,63,64,65,66 |
| W / H == 1/8 | Modes 55, 56,57,58,59,60,61,62,63,64,65,66 |
| W / H == 1/16 | Modes 53, 54, 55, 56,57,58,59,60,61,62,63,64,65,66 |

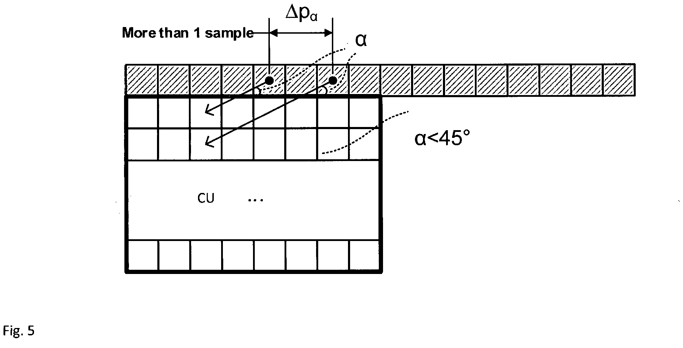

As shown in Fig. 5, which illustrates a problem of discontinuity in case of angular intra prediction directions beyond 45°, two vertically-adjacent predicted samples may use two non-adjacent reference samples in case of a wide-angle intra prediction. Hence, low-pass reference samples filter and side smoothing are applied to the wide-angle prediction to reduce the negative effect of the increased gap $\Delta p_\alpha$. If a wide-angle mode represents a non-fractional offset, there are 8 modes in the wide-angle modes that satisfy this condition, which are [-14, -12, -10, -6, 72, 76, 78, 80] (see the indices in Fig. 3). When a block is predicted by these modes, the samples in the reference buffer are directly copied without applying any interpolation. With this modification, the number of samples that need smoothing is reduced. Besides, it aligns the design of non-fractional modes in the conventional prediction modes and wide-angle modes.

In VVC, 4:2:2 and 4:4:4 chroma formats are supported as well as 4:2:0. A chroma derived mode (DM) derivation table for the 4:2:2 chroma format was initially ported from HEVC extending the number of entries from 35 to 67 to align with the extension of intra prediction modes. Since the HEVC specification does not support a prediction angle below -135 degree (IPMs -2 ...) and above 45 degree (IPMs 66...), the luma intra prediction modes ranging from 2 to 5 are mapped to 2. Therefore the chroma DM derivation table for the 4:2:2 chroma format is updated by replacing some values of the entries of the mapping table to convert the prediction angle more precisely for the chroma blocks. *4-tap interpolation filter and reference sample smoothing*

Four-tap intra interpolation filters, IFs, are utilized to improve the directional intra prediction accuracy. In HEVC, a two-tap linear interpolation filter has been used to generate the intra prediction block in the directional prediction modes (i.e., excluding Planar and DC predictors). In VVC, the two sets of 4-tap IFs replace a lower precision linear interpolation as in HEVC, where one is a DCT-based interpolation filter (DCTIF) and the other one is a 4-tap smoothing interpolation filter (SIF). The DCTIF is constructed in the same way as the one used for the chroma component motion compensation in both HEVC and VVC. The SIF is obtained by convolving the 2-tap linear interpolation filter with [ 1 2 1 ] /4 filter. Dependent on the intra prediction mode, the following reference samples processing is performed:

- The directional intra-prediction mode is classified into one of the following groups:

   o Group A: vertical or horizontal modes (HOR_IDX, VER_IDX),
   o Group B: directional modes that represent non-fractional angles (-14, -12, - 10, -6, 2, 34, 66, 72, 76, 78, 80,) and Planar mode,
   o Group C: remaining directional modes.

- If the directional intra-prediction mode is classified as belonging to group A, then then no filters are applied to the reference samples to generate predicted samples.

- Otherwise, if a mode falls into group B and the mode is a directional mode, and all of following conditions are true, then a [1, 2, 1] reference sample filter may be applied (depending on the MDIS condition) to the reference samples to further copy these filtered values into an intra predictor according to the selected direction, but no interpolation filters are applied::

   ◦ refldx is equal to 0 (no Multiple Reference Line (MRL))
   ◦ transform unit (TU) size is greater than 32
   ◦ Luma
   ◦ No Intra Sub Partition (ISP) block.

- Otherwise, if a mode is classified as belonging to group C, the MRL index is equal to 0, and the current block is not an ISP block, then only an intra reference sample interpolation filter is applied to the reference samples to generate a predicted sample that falls into a fractional or integer position between the reference samples according to a selected direction (no reference sample filtering is performed). The interpolation filter type is determined as follows :

◦ Set minDistVerHor equal to Min(Abs(predModeIntra-50), Abs(predModeIntra-18)).
◦ Set nTbS equal to (Log2(W) + Log2(H)) >> 1.
◦ Set intraHorVerDistThres[nTbS ] as specified below :

| | nTbS = 2 | nTbS = 3 | nTbS = 4 | nTbS = 5 | nTbS = 6 | nTbS = 7 |
| --- | --- | --- | --- | --- | --- | --- |
| intraHorVerDistThres[ nTbS ] | 24 | 14 | 2 | 0 | 0 | 0 |

◦ If minDistVerHor is greater than intraHorVerDistThres[ nTbS ], SIF is used for the interpolation.
◦ Otherwise, DCTIF is used for the interpolation.

*Position dependent intra prediction combination*

In VVC, the results of an intra prediction of DC, planar and several angular modes are further modified by a position dependent intra prediction combination (PDPC) method. PDPC is an intra prediction method which invokes a combination of the boundary reference samples and HEVC style intra prediction with filtered boundary reference samples. PDPC is applied to the following intra modes without signaling: planar, DC, intra angles less than or equal to horizontal (180°), and intra angles greater than or equal to vertical (90°) and less than or equal to 80, where 80 is the last IPM index of a wide-angle mode after mapping (see indices in Fig. 3). If the current block is in coded using block differential pulse code modulation (Bdpcm) mode or a Multiple Reference Line (MRL) index is larger than 0, PDPC is not applied.

The prediction sample *pred(x',y')* is predicted using an intra prediction mode (DC, planar, angular) and a linear combination of reference samples according to the following equation:

$$pred(x',y') = \mathrm{Clip}(0, (1 << \mathrm{BitDepth}) - 1, (wL \times R_{-1,y'} + wT \times R_{x',-1} + (64 - wL - wT) \times pred(x',y') + 32) >> 6)$$

where $R_{x,-1}$, $R_{-1,y}$ represent the reference samples located at the top and left boundaries of current sample $(x, y)$, respectively.

If PDPC is applied to DC, planar, horizontal and vertical intra modes, additional boundary filters are not needed, as required in the case of HEVC DC mode boundary filter or horizontal/vertical mode edge filters. The PDPC process for DC and Planar modes is identical. For angular modes, if the current angular mode is HOR_IDX or VER_IDX, left or top reference samples are not used, respectively. The PDPC weights and scale factors are dependent on the prediction modes and the block sizes. The PDPC is applied to a block having both width and height greater than or equal to 4.

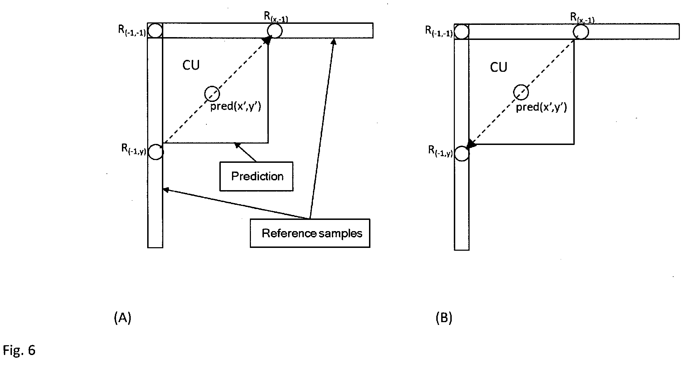

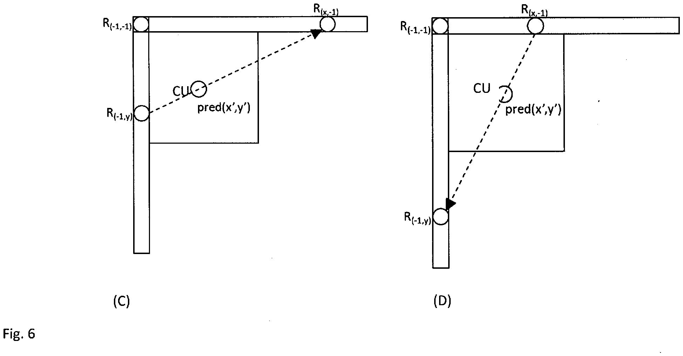

Fig. 6(A) to Fig. 6(D) illustrate the definition of reference samples ($R_{x,-1}$ and $R_{-1,y}$) for the PDPC applied over various prediction modes. Fig. 6(A) illustrates the definition for the diagonal top-right mode, Fig. 6(B) illustrates the definition for the diagonal bottom-left mode, Fig. 6(C) illustrates the definition for the adjacent top-right mode, and Fig. 6(D) illustrates the definition for the adjacent bottom-left mode. The prediction sample *pred(x', y')* is located at $(x',y')$ within the prediction block CU. As an example, the coordinate x of the reference sample $R_{x,-1}$ is given by: $x = x' + y' + 1$, and the coordinate y of the reference sample $R_{-1,y}$ is similarly given by: $y = x' + y' + 1$ for the diagonal modes. For the other angular modes, the reference samples $R_{x,-1}$ and $R_{-1,y}$ may be located at fractional sample positions. In this case, the sample value of the nearest integer sample location is used.

*Gradient PDPC*

In VVC, for a few scenarios, PDPC may not be applied due to an unavailability of the secondary reference samples. In these cases, a gradient based PDPC, extended from horizontal/vertical mode, is applied (JVET-Q0391). The PDPC weights (wT / wL) and nScale parameter for determining the decay in PDPC weights with respect to the distance from left/top boundary are set equal to corresponding parameters in horizontal/vertical mode, respectively. When the secondary reference sample is at a fractional sample position, a bilinear interpolation is applied.

Conventionally, in a state-of-the-art angular intra prediction, when the IPM index falls in the first or the fourth quadrants of angular intra prediction directions (see Fig. 3), only one of two reference lines (reconstructed or reference blocks) at the left and on top/above the currently processed block is used for a multi-tap reference projection. This may lead to a situation in which potentially useful texture information from the other reference line (reconstructed or reference blocks) may by overlooked so that the prediction performance may not be optimal. Stated differently, in the state-of-the-art angular intra prediction, when the IPM index falls in the first or the fourth quadrants, one of the two reference lines at left and top are used as a main reference line for multi-tap reference projection, while the other reference line, referred to as a side reference line, contributes only in a limited way through the PDPC or gradient-PDPC process. The process in the PDPC is significantly less sophisticated to incorporate the texture information from the secondary reference. Therefore, it might overlook potentially useful texture information in the side reference line. In particular, for pixel positions further from the main reference line and closer to the side reference line, this drawback can have more negative impact, since the side reference line may have probably provided more reliable texture information than the main reference line.

Embodiments of the present disclosure addresses the drawbacks in conventional approaches by an angular intra prediction which, when the IPM index falls in the first or the fourth quadrants, uses both reference lines (reconstructed or reference blocks), e.g., the reference lines at the left and on top/above the currently processed block for the reference projection. 1st and 2nd predictions from the two reference lines are obtained and used for determining the angular prediction. Stated differently, embodiments of the present disclosure proposes a method or process that, for angular IPM indexes in the first or fourth quadrant, uses both reference lines at the left and above the block for an angular intra prediction. More specifically, embodiments deploy a fusion scheme to blend two prediction signals, e.g., the prediction from the left reference line and the prediction from the above reference line, in order to compute a final prediction signal of a block. A difference between the inventive approach and the PDPC approach according to the state-of-the-art is that the inventive approach uses the exact same process of angular intra prediction by multi-tap reference pixel projection in order to produce the two prediction signals.

The present disclosure is advantageous as it avoids a situation overlooking potentially useful texture information from any reference line (reconstructed or reference blocks) so that the prediction performance is improved.

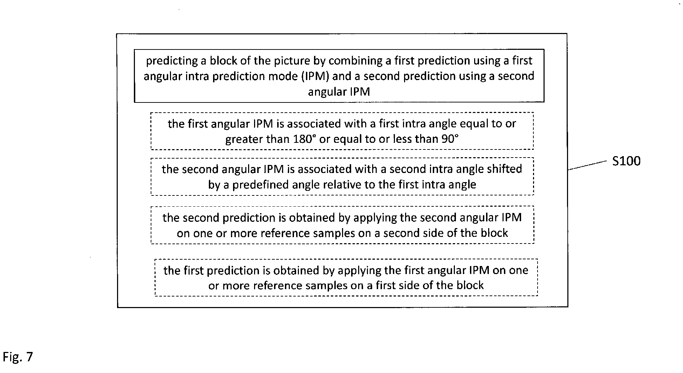

Fig. 7 illustrates a flow diagram of an embodiment of a method of processing one or more blocks of a picture. The method includes:

S100: Predicting a block of the picture by combining a first prediction using a first angular intra prediction mode (IPM) and a second prediction using a second angular IPM. Each angular IPM is mapped to an intra angle. The first angular IPM is associated with a first intra angle equal to or greater than 180° or equal to or less than 90°, and the second angular IPM is associated with a second intra angle shifted by a predefined angle relative to the first intra angle. The first prediction is obtained by applying the first angular IPM on one or more reference samples on a first side of the block, and the second prediction is obtained by applying the second angular IPM on one or more reference samples on a second side of the block.

Thus, embodiments of the present disclosure provide an angular intra prediction of a block by combining two predictions using 1st and 2nd angular IPMs, respectively. The 1st angular IPM has an IPM index with an intra angle in the first quadrant or first wide-angle quadrant (angle$\geq$180°) or in the fourth quadrant or second wide-angle quadrant (angle$\leq$90°). The first angle is shifted, e.g., by 180°, thereby obtaining a second intra angle, and the 2nd angular IPM is the angular IPM having the IPM index with the second intra angle. Then the predictions obtained by applying the 1st and 2nd angular IPMs to the 1st and 2nd sides of the block are obtained. Thus, other than in conventional approaches (using in case of an angular IPM angle $\geq$180°/$\leq$90° only one reference line), the invention uses the additional (shifted) angular IPM with the additional reference line, and fuses the obtained predictions.

Embodiments of the present disclosure provide for a prediction fusion that, from a coded mode $M_c$ located either in the first or the fourth quadrant of angular intra modes, determines or computes a first mode, also referred to as primary mode $M_p$, and a second mode, also referred to as secondary mode $M_s$. The determination or computation of $M_p$ and $M_s$ is carried out such that they are located in the first quadrant and in the second wide-angle quadrant, respectively, or in the fourth quadrant and the first wide-angle quadrant, respectively. From $M_p$ and $M_s$, two angular prediction signals are determined or computed, also referred to as primary prediction $Pred_p$ and secondary prediction $Pred_s$. The final prediction of the block is then computed as a fusion of $Pred_p$ and $Pred_s$, also referred to as fusion prediction $Pred_f$.

In accordance with embodiments of the present disclosure, a linear combination is used to implement the fusion function, where the fusion weights may be determined in different granularities, e.g., at a block-level or a pixel-level. The fusion weights may vary between blocks, or they might be fixed.

In accordance with embodiments of the present disclosure, the linear combination uses block-level weights that are fixed.

In accordance with embodiments of the present disclosure, the linear combination uses block-level weights that vary from one block to another. For instance, a change in the weight may be determined by an explicit signaling or by an implicit decoder-side derivation.

In accordance with embodiments of the present disclosure, the linear combination uses pixel-level weights that vary from one block to another. Again, a change in the weight may be determined by an explicit signaling or by an implicit decoder-side derivation.

In accordance with embodiments of the present disclosure, the pixel-level weight adaptation takes into account a distance of a pixel from each of the reference lines at the left and above the currently processed block.

In accordance with embodiments of the present disclosure, the inventive approach is conditionally disabled at a block-level.

In accordance with embodiments of the present disclosure, an availability of reference pixels is used to conditionally enable the inventive approach, the fusion of the predictions, at a block-level.

In accordance with embodiments of the present disclosure, an angle of the principal mode $Mp$ is used to conditionally enable the inventive approach, the fusion of the predictions, at a block-level.

In accordance with embodiments of the present disclosure, an aspect-ratio of the currently processed block is used to conditionally enable the inventive approach, the fusion of the predictions, at a block-level.

In accordance with embodiments of the present disclosure, a combination of at least two of above parameters availability of reference pixels, angle of $Mp$, and aspect-ratio is used to conditionally enable the inventive approach, the fusion of the predictions, at a block-level.

In accordance with embodiments of the present disclosure, the use of the inventive approach is controlled by at least one high-level syntax element such as a Picture Parameter Set (PPS) or a Sequence Parameter Set (SPS) parameter.

In accordance with embodiments of the present disclosure, the use of the inventive approach at the block-level is explicitly signaled in a data stream, like a bitstream, with at least one block-level syntax element.

In accordance with embodiments of the present disclosure, the use of the inventive approach is signaled at the block-level, however, one or more internal parameters, such as fusion weights, are implicitly derived at a decoder side using available information, like one or more block characteristics.

In accordance with embodiments of the present disclosure, the use of the inventive approach is implicitly derived at a decoder side using available information, like one or more block characteristics.

In accordance with embodiments of the present disclosure, both the use of the inventive approach and its internal parameters, such as fusion weights, are implicitly derived at a decoder side using available information, like one or more block characteristics.

Embodiments of the present disclosure are now described in more detail. The following description uses the following common definitions:

*Single-reference IPMs*

Except for angular intra prediction modes (IPMs), which are located in the second and the third quadrant (see Fig. 3) and use both reference lines at the top/above and at the left of the currently processed block, all other angular IPMs are referred to as single reference IPMs. A block that is coded with such an IPM is referred to as a single-reference intra block.

*Coded IPM ($M_c$), Principal IPM ($M_p$) and shifted-angle IPM ($M_s$)*

An intra block in the state-of-the-art is typically associated with an IPM that is associated with a coding mode. This IPM, referred to as the "coded IPM" or $M_c$, depending on the intra coding tool, may be the IPM that is parsed from the bitstream, e.g., for a regular IPM block, or that is derived from block template, e.g., by using decoder side intra mode derivation (DIMD) or template-based intra mode derivation (TIMD).

In case of single-reference intra blocks, the angular prediction may be performed by the coded IPM itself, or a 180-degree shifted version of it. This decision is made based on whether the block characteristics meet the wide-angle requirements. Therefore, the principal IPM ($M_p$) and the shifted-angle IPM ($M_s$) are defined as follows:

$$M_p = \begin{cases} M_c, & block\ is\ not\ WideAngle \\ M_c + 180°, & block\ is\ WideAngle \end{cases}$$

and

$$M_s = \begin{cases} M_c + 180°, & block\ is\ not\ WideAngle \\ M_c, & block\ is\ WideAngle \end{cases}$$

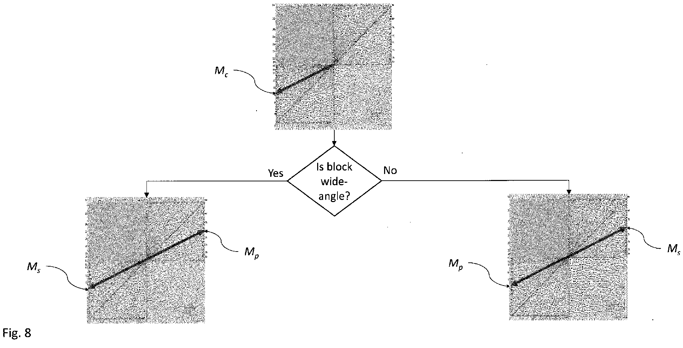

Fig. 8 illustrates the above conditional process to determine the primary IPM, $M_p$, and the secondary or shifted IPM, $M_s$, based on the coded mode $M_c$ and the use of a wide-angle. Fig.8 assumes the coded mode $M_c$ to be in the first quadrant $Q^1$ (see Fig. 3), and in case of a wide-angle block (see, e.g., Fig.4(A) or Fig. 4(B)), the primary IPM, $M_p$, in the second wide-angle quarter or quadrant $Q^{wa2}$ while the secondary or shifted IPM, $M_s$, is located in the first quadrant $Q^1$. The secondary or shifted IPM, $M_s$, may be obtained by using the intra angle of the primary IPM, shifting the intra angle by 180°, and selecting as the secondary IPM an angular IPM having the IPM index with the shifted intra angle. In case of a non-wide-angle block (e.g., a square block), the primary IPM, $M_p$, in the first quadrant $Q^1$ while the secondary or shifted IPM, $M_s$, is located in the first wide-angle quarter or quadrant $Q^{wa1}$. The secondary or shifted IPM, $M_s$, may be obtained as described above, by using the intra angle of the primary IPM, shifting the intra angle by 180°, and selecting as the secondary IPM an angular IPM having the IPM index with the shifted intra angle.

*Main and side intra prediction reference lines*

For each single-reference block in the state-of-the-art, the main reference line, referred to as $Ref_{main}$, is the reference line that is used for angular intra prediction by the principal IPM, $M_p$, while the other reference line that is not used by the state-of-the-art is referred to as $Ref_{side}$. More precisely, when defining vertical and horizontal modes as IPM indexes larger and smaller, respectively, than the diagonal IPM, which is IPM = 34 in VVC and ECM, then the main and side reference lines are defined as follows:

$$Ref_{main} = \begin{cases} Above, & M_p \text{ is vertical} \\ Left, & M_p \text{ is horizontal} \end{cases}$$

and

$$Ref_{side} = \begin{cases} Left, & M_p \text{ is vertical} \\ Above, & M_p \text{ is horizontal} \end{cases}$$

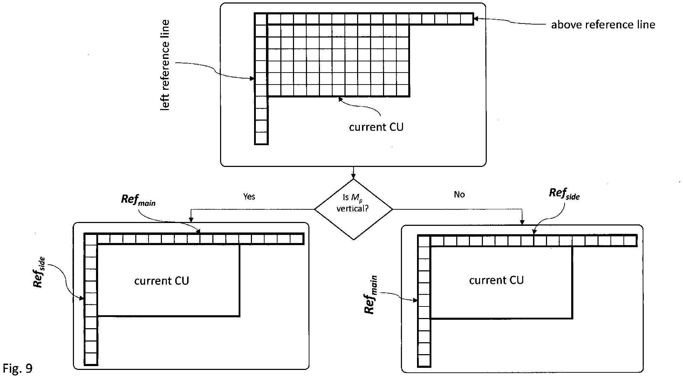

Fig. 9 illustrates how $Ref_{main}$ and $Ref_{side}$ are determined based on the direction (horizontal/vertical) of the principal mode $M_p$. When $M_p$ is vertical, i.e., when the intra angle is equal to or less than 90°, the main reference line $Ref_{main}$ is above the current CU, and the other reference line $Ref_{side}$ is left of the current Block CU. When $M_p$ is not vertical, i.e., when the intra angle equal is greater than 90°, the main reference line $Ref_{main}$ is left of the current CU, and the other reference line $Ref_{side}$ is above the current Block CU.

*Principal prediction and secondary prediction: $Pred_p$ and $Pred_s$*

The principal prediction is the prediction signal that is obtained or produced by applying the principal mode $M_p$ on the main reference line $Ref_{main}$. In accordance with the present disclosure a new prediction signal, referred to as a secondary prediction $Pred_s$, is used. The secondary prediction $Pred_s$, is defined as the prediction signal that is obtained or produced by applying the shifted-angle prediction mode $M_s$ on the side reference line $Ref_{side}$.

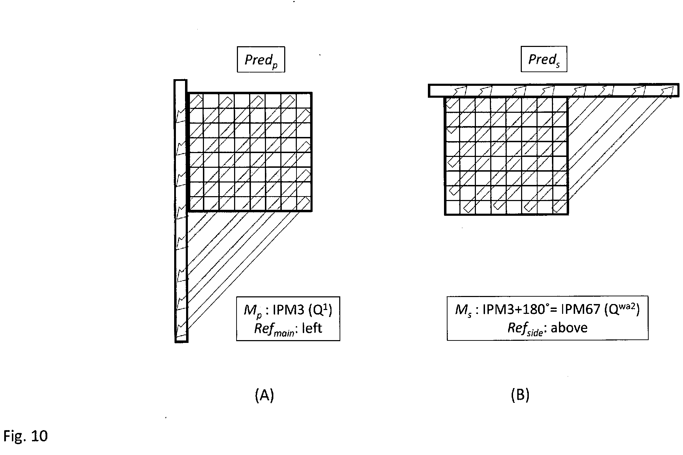

For example when assuming the principal mode $M_p$ to haven an IPM index = 3, the shifted-angle or secondary mode $M_s$ has an IPM index = 67 as has been explained above with reference to Fig. 8. Fig. 10(A) and Fig. 10(B) illustrate the determination or computing of the first prediction signal $Pred_p$ by applying $M_p$ on $Ref_{main}$ (Fig. 10(A)), and of the second prediction signal $Pred_s$ by applying $M_s$ on $Ref_{side}$ (Fig. 10(B)). As may be seen, the principal IPM3 is located in the first quadrant while the shifted IPM = 67 is located in the quadrant $Q^{wa2}$, which consists of vertical wide-angle IPMs. It is noted that all aspects of this disclosure may be extended to any other example as long as the principal IPM is located in the first or the fourth quadrant.

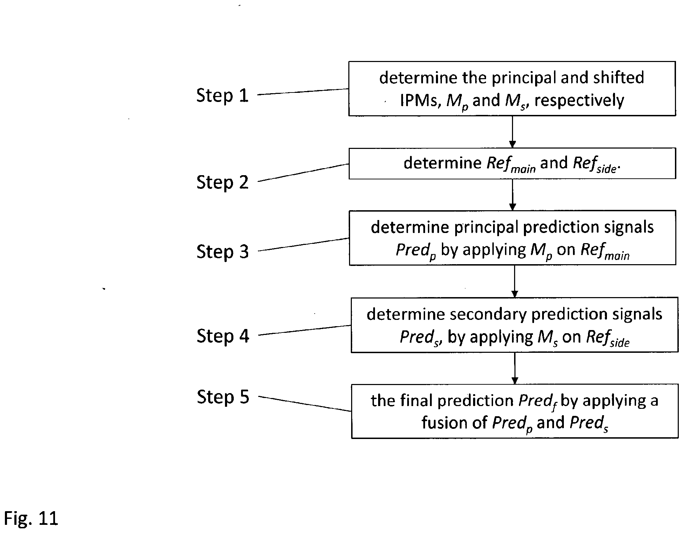

In accordance with embodiments, some or all single-reference intra blocks determine or compute their prediction signal using a fusion of the primary and secondary predictions, $Pred_p$ and $Pred_s$, as described above. Intra blocks using the inventive approach are also referred herein as fusion blocks Fig. 11 illustrates a flow diagram of a prediction process for a fusion block in accordance with embodiments of the present disclosure. The process includes:

Step 1: Based on the coded IPM, $M_c$, and whether Wide-Angle Intra Prediction (WAIP) is in use, determine the principal and shifted IPMs, $M_p$ and $M_s$, respectively.
Step 2: Based on the direction of $M_p$ (horizontal or vertical), determine the $Ref_{main}$ and the $Ref_{side}$.
Step 3: Determine or compute the principal prediction signals $Pred_p$ by applying $M_p$ on $Ref_{main}$.
Step 4: Determine or compute the secondary prediction signals $Pred_s$, by applying $M_s$ on $Ref_{side}$.
Step 5: Determine or compute the final prediction $Pred_f$ of the block by applying a fusion of $Pred_p$ and $Pred_s$, e.g., as:

$$Pred_f = fusion(Pred_p, Pred_s)$$

*Fusion*

In accordance with embodiments, the fusion function is implemented by using a linear combination. Two independent parameters determine the fusion function. The first parameter is a weighting granularity and a second parameter is a weight adaptation aspect.

The weighting granularity may be block-level or pixel-level. In the block-level weighting granularity, the weights of all pixels within the block are the same, while in the pixel-level weighting granularity a location-dependent weighting may be used.

The weight adaptation may fix the weights or may allow them to vary from one block to another.

In accordance with an embodiment, using the above parameters in a linear combination fusion weighting includes a block-level fixed weighting. The fusion weights of the predictions $Pred_p$ and $Pred_s$ are fixed, at the block-level, to $\omega_p$ and $\omega_s$, respectively. Therefore, the fusion function for a pixel position (x, y) within a fusion block may be formulated as follows:

$$Pred_f^{x,y} = \frac{\omega_s Pred_p^{x,y} + \omega_p Pred_s^{x,y}}{\omega_p + \omega_s}$$

In accordance with another embodiment, using above parameters in a linear combination fusion weighting includes a pixel-level fixed weighting. The fusion weights vary from one pixel location to another and are defined as $\omega_p^{x,y}$ and $\omega_s^{x,y}$. Therefore, the fusion function for a pixel position (*x,y*) within a fusion block may be formulated as follows:

$$Pred_f^{x,y} = \frac{\omega_p^{x,y} Pred_p^{x,y} + \omega_s^{x,y} Pred_s^{x,y}}{\omega_p^{x,y} + \omega_s^{x,y}}$$

Regardless of the weight granularity, e.g. block-level or pixel-level, in accordance with embodiments a weight adaptation may be used. In accordance with one embodiment, the weights are not modified from one block to another..
In accordance with an embodiment, the weight adaptation may be explicit or implicit.
For the explicit weight adaptation, at least one syntax element is signaled in a bitstream to indicate how the weights are adapted to the block. In accordance with an embodiment, a syntax element is signaled to determine a relative weight of the principal or first prediction to the secondary or second prediction.
For the explicit weight adaptation, no bitstream signaling is needed, rather available information, e.g., at the decoder side, like block characteristics may be used to adapt the fusion weights. In accordance with an embodiment, $\omega_p^{x,y}$ and $\omega_s^{x,y}$ may be defined as a distance between the corresponding reference line used for that prediction and the pixel location. In another embodiment, a weight of zero may be used for $\omega_p^{x,y}$, i.e., for the first or principal prediction, when the pixel position (x, y) is immediately next to the secondary reference line $Ref_{side}$. In yet another embodiment for an implicit weight adaptation, the first and second predictions may be applied on the left and above templates separately, where the predictions use the left and above reference lines, respectively. Then based on a comparison of the template-based distortion of the two predictions, the weights of each prediction within the block is determined.

*Conditional fusion*

In accordance with embodiments, the use of the inventive approach, like the above described fusion method on single-reference blocks, may be enabled conditionally, and different factors may be taken into account.
In accordance with an embodiment, the availability of reference lines is used to conditionally enable the inventive approach, like the above described fusion method on single-reference blocks,. When the secondary reference line $Ref_{side}$ is incomplete, meaning that some of the top-right neighbor pixels are not available and need to be copied from the other samples, the inventive approach, like the above described fusion method on single-reference blocks, may be disabled.
In accordance with another embodiment, an angle of the principal mode $M_p$ may be used to enable the inventive approach, like the above described fusion method on single-reference blocks. The inventive approach, like the above described fusion method on single-reference blocks, may be disabled if $M_p$ is close to horizontal IPM or to the vertical IPM, i.e., in within a predefined angular range around the horizontal or vertical IPM.
In accordance with yet another embodiment, an aspect ratio of the currently processed block may be used to conditionally enable the inventive approach, like the above described fusion method on single-reference blocks. If the aspect ratio of the block is too small, e.g., the block has the shape of the thin rectangle, then the inventive approach, like the above described fusion method on single-reference blocks is disabled.
In accordance with embodiments, two or more or all of the above factors may be combined for conditionally enabling the inventive approach, like the above described fusion method on single-reference blocks.

*Signaling*

In accordance with embodiments, the use of the inventive approach, like the above described fusion method on single-reference blocks, may be controlled at a high-level syntax, e.g., at a picture-level or at a sequence-level. In accordance with embodiments, an Sequence Parameter Set (SPS) flag may enable/disable the inventive approach for the entire sequence-level.
In accordance with embodiments, at the block-level, the use of the inventive approach as well as its internal parameters, e.g., the fusion weights, may be signaled explicitly or may be derived implicitly derived using available information, e.g., block characteristics.

In case of an explicit signaling, in accordance with embodiments, additional information regarding the application of the fusion method, e.g., fusion weighting information, may be signaled explicitly, or may be derived implicitly from available information, e.g., at the decoder side, such as block characteristics. In other words, it is possible to explicitly signal the use of fusion at the block-level but implicitly derive its parameters such as the fusion weights.

In accordance with other embodiments, in the case of an implicit derivation, both the use of the fusion method and its internal parameters, such as the fusion weights, are derived at the decoder side using the available information.

*Decoding Method*

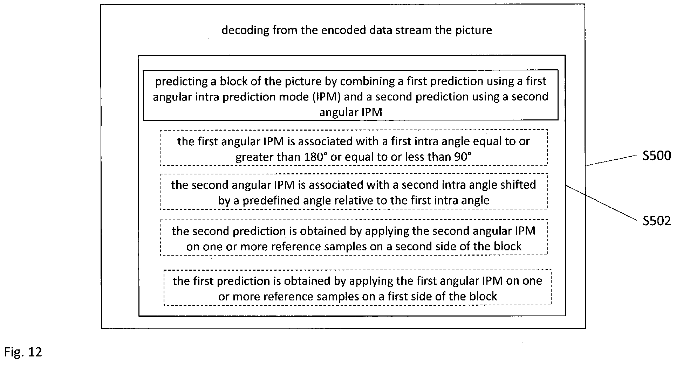

Fig. 12 illustrates a flow diagram of a method for decoding an encoded data stream, the encoded data stream including data representing a picture. The method includes the following:

S500: Decoding from the encoded data stream the picture, wherein decoding the picture comprises predicting S502 a block of the picture by combining a first prediction using a first angular intra prediction mode (IPM) and a second prediction using a second angular IPM. Each angular IPM is mapped to an intra angle. The first angular IPM is associated with a first intra angle equal to or greater than 180° or equal to or less than 90°, and the second angular IPM is associated with a second intra angle shifted by a predefined angle relative to the first intra angle. The first prediction is obtained by applying the first angular IPM on one or more reference samples on a first side of the block, and the second prediction is obtained by applying the second angular IPM on one or more reference samples on a second side of the block.

*Encoding Method*

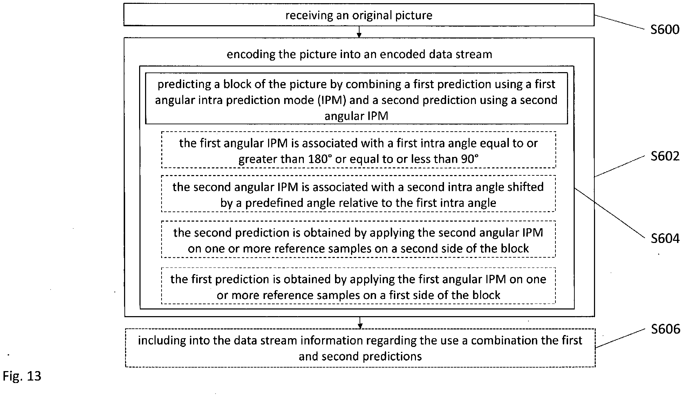

Fig. 13 illustrates a flow diagram of a method for encoding a picture into an encoded data stream. The encoded data stream includes data representing the picture and the method includes the following:

S600: Receiving an original picture.

S602: Encoding the picture into the encoded data stream, wherein encoding the picture comprises predicting S502 a block of the picture by combining a first prediction using a first angular intra prediction mode (IPM) and a second prediction using a second angular IPM. Each angular IPM is mapped to an intra angle. The first angular IPM is associated with a first intra angle equal to or greater than 180° or equal to or less than 90°, and the second angular IPM is associated with a second intra angle shifted by a predefined angle relative to the first intra angle. The first prediction is obtained by applying the first angular IPM on one or more reference samples on a first side of the block, and the second prediction is obtained by applying the second angular IPM on one or more reference samples on a second side of the block.

Optionally, the method comprises including S606 into the data stream or bitstream an indication, e.g., a flag or an index, or information regarding the use a combination the first and second predictions, e.g., one or more of the following:

- that a block of the picture is predicted by combining a first prediction using a first angular intra prediction mode (IPM) and a second prediction using a second angular IPM are combined, wherein each angular IPM is mapped to an intra angle, the first angular IPM is associated with a first intra angle equal to or greater than 180° or equal to greater or less than 90°, and the second angular IPM is associated with a second intra angle shifted by a predefined angle relative to the first intra angle, and wherein the first prediction is obtained by applying the first angular IPM on one or more reference samples on a first side of the block, and the second prediction is obtained by applying the second angular IPM on one or more reference samples on a second side of the block,

*Further embodiments*

So far, the inventive concept has been described with reference to aspects and embodiments concerning methods of processing one or more blocks of a picture, e.g., for decoding and/or for encoding. In accordance with further embodiments, the present disclosure also provides an apparatus of processing one or more blocks of a picture as encoders/decoders including such an apparatus.

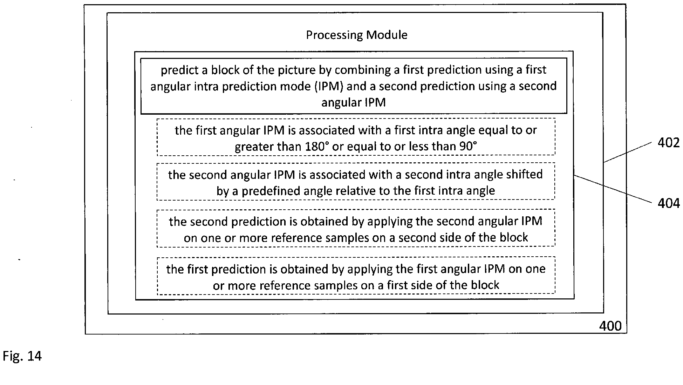

Fig. 14 illustrates a block diagram of an apparatus 400 of predicting one or more blocks of a picture in accordance with embodiments of the present disclosure. The apparatus 400 includes a processing module 402. The processing module is configured to predict 404 a block of the picture by combining a first prediction using a first angular intra prediction mode (IPM) and a second prediction using a second angular IPM. Each angular IPM is mapped to an intra angle. The first angular IPM is associated with a first intra angle equal to or greater than 180° or equal to or less than 90°, and the second angular IPM is associated with a second intra angle shifted by a predefined angle relative to the first intra angle. The first prediction is obtained by applying the first angular IPM on one or more reference samples on a first side of the block, and the second prediction is obtained by applying the second angular IPM on one or more reference samples on a second side of the block.

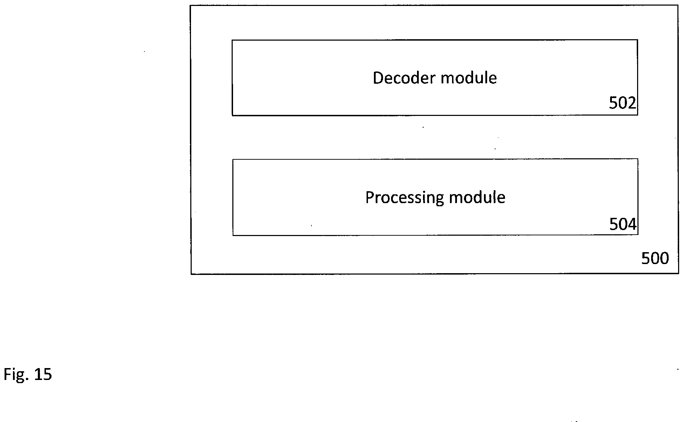

Fig. 15 illustrates a block diagram of a decoder for decoding an encoded data stream in accordance with embodiments of the present disclosure. The encoded data stream includes data representing a picture. The decoder 500 includes the following modules:

502: A decoder module configured to decode from the encoded data stream the picture.
504: A processing module, e.g., a prediction module 170 as depicted in Fig. 2. The processing module 502 is configured to operate in accordance with embodiments of the present disclosure. For example, the processing module 502 includes an apparatus as described with reference to Fig. 14.

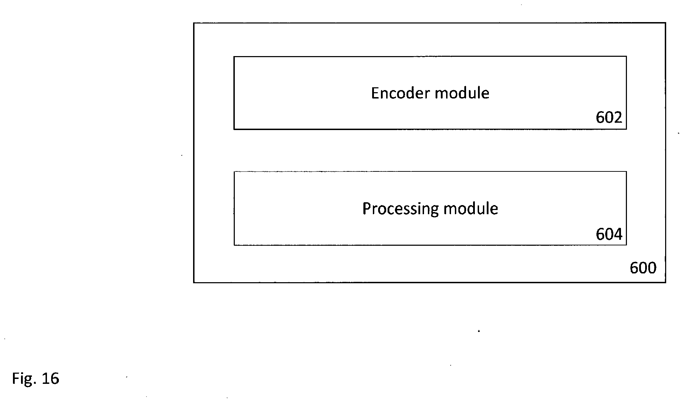

Fig. 16 illustrates a block diagram of an encoder for encoding a picture into an encoded data stream in accordance with embodiments of the present disclosure. The encoded data stream includes data representing the picture. The encoder 600 includes the following modules:

602: An encoder module configured to receive the original picture and to encode the picture into the encoded data stream.
604: A processing module, e.g., a prediction module 124 as depicted in Fig. 1. The processing module 602 is configured to operate in accordance with embodiments of the present disclosure. For example, the processing module 502 includes an apparatus as described with reference to Fig. 14.

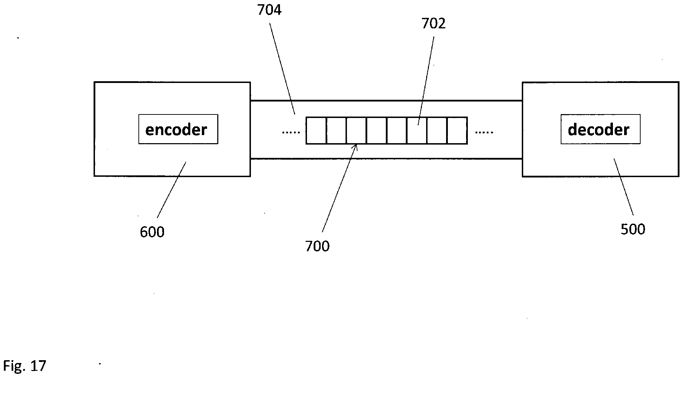

Fig. 17 illustrates a data stream 700 in accordance with embodiments of the present disclosure, which has encoded thereinto a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 704, like cable or a radio link, and the decoder 500 decodes from the data stream 700 the picture. The data stream includes a signaling 702, which is encoded into the data stream by the encoder 600. The signaling may be an indication, e.g., a flag or an index, or information regarding the use a combination the first and second predictions, e.g., one or more of the following:

- that a block of the picture is predicted by combining a first prediction using a first angular intra prediction mode (IPM) and a second prediction using a second angular IPM are combined, wherein each angular IPM is mapped to an intra angle, the first angular IPM is associated with a first intra angle equal to or greater than 180° or equal to greater or less than 90°, and the second angular IPM is associated with a second intra angle shifted by a predefined angle relative to the first intra angle, and wherein the first prediction is obtained by applying the first angular IPM on one or more reference samples on a first side of the block, and the second prediction is obtained by applying the second angular IPM on one or more reference samples on a second side of the block,
- one or more parameters for combining the first prediction and the second prediction.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

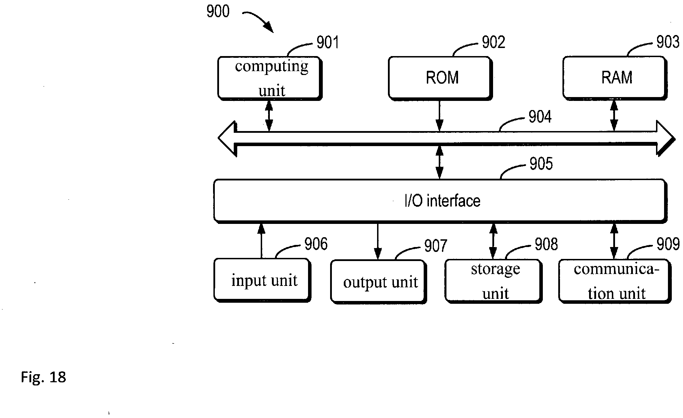

Fig. 18 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short): The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

A 1st embodiment provide a method of processing one or more blocks of a picture, the method comprising:

predicting a block of the picture by combining a first prediction using a first angular intra prediction mode (IPM) and a second prediction using a second angular IPM,
wherein each angular IPM is mapped to an intra angle, the first angular IPM is associated with a first intra angle equal to or greater than 180° or equal to or less than 90°, and the second angular IPM is associated with a second intra angle shifted by a predefined angle relative to the first intra angle, and
wherein the first prediction is obtained by applying the first angular IPM on one or more reference samples on a first side of the block, and the second prediction is obtained by applying the second angular IPM on one or more reference samples on a second side of the block.

A 2nd embodiment provide the method of the 1st embodiment, wherein the method further comprises:

- obtaining the first angular IPM associated with the first intra angle,
- shifting the first intra angle by the predefined angle for obtaining the second intra angle, and
- selecting an angular IPM associated with the second intra angle as the second angular IPM.

A 3rd embodiment provide the method of the 1st or 2nd embodiment, wherein the predefined angle is 180°.

A 4th embodiment provide the method of any one of the preceding embodiments, wherein

- when the block is not a wide angle block, like a square block, the first intra angle is equal to or greater than 180° and equal to or less than 225°, and the second intra angle is equal to or less than 45° and equal to or greater than 0°, and/or
- when the block is a wide angle block, like a non-square block, the first intra angle is equal to or less than 45° and equal to or greater than 0°, and the second intra angle is equal to or greater than 180° and equal to or less than 225°.

A 5th embodiment provide the method of any one of the preceding embodiments, wherein the first angular IPM is

- parsed from a data stream, or
- derived from a block template, e.g., using decoder side intra mode derivation (DIMD) or template-based intra mode derivation (TIMD).

A 6th embodiment provide the method of any one of the preceding embodiments, wherein

- when the first intra angle is equal to or greater than 180°, the first side of the block is left of the block, and the second side is above the block, and/or
- when the first intra angle equal to greater or less than 90°, the first side of the block is above the block, and the second side is left of the block.

A 7th embodiment provide the method of any one of the preceding embodiments, wherein the block has a width W and a height H, and

- when the block is not a wide angle block, like a square block, a reference line including the reference samples on the first side has a length of W, and a reference line including the reference samples on the second side has a length of H, and/or
- when the block is a wide angle block, like a non-square block, a reference line including the reference samples on the first side has a length of 2W+1, and a reference line including the reference samples on the second side has a length of 2H+1.

An 8th embodiment provide the method of any one of the preceding embodiments, wherein a set of angular IPMs covers an intra angle range of between 0° and 270°, the set of angular IPMs being divides into four non-wide-angle quarters extending from 225° to 180° (Q1), from 180° to 135° (Q2), from 135° to 90° (Q3) and from 90° to 45° (Q4), respectively, and into two wide-angle quarters extending from 225° to 270° ($Q^{wa1}$) and from 45° to 0° ($Q^{wa2}$), and

the first angular IPM is from one of Q1, Q4, Q$^{wa1}$ and Q$^{wa2}$.

A 9$^{th}$ embodiment provide the method of any one of the preceding embodiments, wherein the first prediction and the second prediction are combined by fusing.

A 10$^{th}$ embodiment provide the method of the 9$^{th}$ embodiment, wherein the first prediction and the second prediction are fused by a linear combination using

- a block-level weighting applying the same fusion weights for all pixels within the block, or
- a pixel-level weighting applying location-dependent fusion weights.

An 11$^{th}$ embodiment provide the method of the 10$^{th}$ embodiment, wherein, when using the block-level weighting, a fusion function for a pixel position *(x, y)* is as follows:

$$Pred_f^{x,y} = \frac{\omega_s Pred_p^{x,y} + \omega_p Pred_s^{x,y}}{\omega_p + \omega_s},$$

with

$Pred_p^{x,y}$      first prediction of pixel position (*x, y*),

$Pred_s^{x,y}$      second prediction of pixel position (*x, y*),

$\omega_p$     fusion weight of the first prediction for the block including pixel position (*x, y*),

$\omega_s$     fusion weight of the second prediction for the block including pixel position (*x, y*).

A 12$^{th}$ embodiment provide the method of the 10$^{th}$ embodiment, wherein, when using the pixel-level weighting, a fusion function for a pixel position (x, y) is as follows:

$$Pred_f^{x,y} = \frac{\omega_s^{x,y} Pred_p^{x,y} + \omega_p^{x,y} Pred_s^{x,y}}{\omega_p^{x,y} + \omega_s^{x,y}},$$

with

$Pred_p^{x,y}$      first prediction of pixel position (*x, y*),

$Pred_s^{x,y}$      second prediction of pixel position (*x, y*),

$\omega_p^{x,y}$     fusion weight of the first prediction for the pixel position (*x, y*),

$\omega_s^{x,y}$     fusion weight of the second prediction for the pixel position (*x, y*).

A 13$^{th}$ embodiment provide the method of any one of the 9$^{th}$ to 12$^{th}$ embodiments, wherein the fusion weights are fixed.

A 14$^{th}$ embodiment provide the method of any one of the 9$^{th}$ to 12$^{th}$ embodiments, wherein the fusion weights vary from one block to another block, and a change in the fusion weights may be determined by an explicit signaling.

A 15$^{th}$ embodiment provide the method of the 14$^{th}$ embodiment, wherein, for explicitly signaling the change in the fusion weights, at least one syntax element is signaled in a data stream to indicate how the weights are adapted, e.g., by signaling a syntax element indicating a relative weight of the first prediction to the second prediction.

A 16$^{th}$ embodiment provide the method of any one of the 9$^{th}$ to 12$^{th}$ embodiments, wherein the fusion weights vary from one block to another block, and a change in the fusion weights may be determined by an implicit derivation using one or more block characteristics.

A 17$^{th}$ embodiment provide the method of the 16$^{th}$ embodiment, wherein

- the fusion weight for the first prediction is determined using a distance between the first side of the block and the pixel position (*x, y*), and the fusion weight for the second prediction is determined using a distance between the second side of the block and the pixel position ($x$, $y$), or
- the fusion weights for the first prediction and for the second prediction are determined using template-based distortions of the first and second predictions.

An 18th embodiment provide the method of any one of the preceding embodiments, wherein predicting the block by combining the first prediction and the second prediction is enabled or disabled responsive to one or more factors.

A 19th embodiment provide the method of the 18th embodiment, wherein the one or more factors include one or more of the following:

- an availability of a sufficient number of reference samples, wherein combining the first prediction and the second prediction is disabled when the number of reference samples on the first and/or second side of the block is below a predefined threshold,
- the first intra angle, wherein combining the first prediction and the second prediction is disabled when the first angular IPM is within a predefined range around a horizontal or vertical angular IPM,
- an aspect ratio of the block, wherein combining the first prediction and the second prediction is disabled when the aspect ratio of the block is below a predefined threshold, e.g., when the block is a thin rectangle.

A 20th embodiment provide the method of any one of the preceding embodiments, wherein predicting the block by combining the first prediction and the second prediction is controlled at one of a plurality of different processing levels.

A 21st embodiment provide the method of the 20th embodiment, wherein the plurality of different processing levels comprise:

- a sequence-level at which the prediction of the block by combining the first prediction and the second prediction is enabled/disabled for all coding units (CUs) in all coding tree units (CTUs) of all frames of a video content, e.g., responsive to a signaling using a High Level Syntax (HLS), like a Sequence Parameter Set, SPS, flag,
- a frame- or picture-level at which the prediction of the block by combining the first prediction and the second prediction is enabled/disabled for all coding units (CUs) of all coding tree units (CTUs) in the frame/picture, e.g., responsive to a signaling using a High Level Syntax (HLS), like a Sequence Parameter Set, SPS, flag,
- a block- or CU-level at which the prediction of the block by combining the first prediction and the second prediction is enabled/disabled for each individual coding unit (CU) or block.

A 22nd embodiment provide the method of the 20th or 21st embodiment, wherein '

- using the prediction of the block by combining the first prediction and the second prediction and associated parameters, like fusion weights, are explicitly signaled or implicitly derived using available information, like one or more certain block characteristics, or
- using the prediction of the block by combining the first prediction and the second prediction and associated parameters, like fusion weights, are implicitly derived using available information, like one or more certain block characteristics, or
- using the prediction of the block by combining the first prediction and the second prediction is explicitly signaled, and associated parameters are implicitly derived using available information, like one or more certain block characteristics.

A 23rd embodiment provide a method for decoding an encoded data stream, the encoded data stream including data representing a picture, and the method comprising:

decoding from the encoded data stream the picture,
wherein decoding the picture comprises processing one or more blocks of the picture according to the method of any one of the preceding embodiments

A 24th embodiment provide a method for encoding a picture into an encoded data stream, the encoded data stream including data representing the picture, and the method comprising:

receiving a picture, and
encoding the picture into the encoded data stream,
wherein encoding the picture comprises processing one or more blocks of the picture according to the method of any one of the 1st to 22nd embodiments.

A 25th embodiment provide a non-transitory computer-readable storage medium comprising instructions which, when executed by a computer, cause the computer to carry out the method of any one of the preceding embodiments.

A 26th embodiment provide an apparatus of processing one or more blocks of a picture, the apparatus comprising:

> a processing module, wherein the processing module is configured to predict a block of the picture by combining a first prediction using a first angular intra prediction mode (IPM) and a second prediction using a second angular IPM,
> wherein each angular IPM is mapped to an intra angle, the first angular IPM is associated with a first intra angle equal to or greater than 180° or equal to greater or less than 90°, and the second angular IPM is associated with a second intra angle shifted by a predefined angle relative to the first intra angle, and
> wherein, the first prediction is obtained by applying the first angular IPM on one or more reference samples on a first side of the block, and the second prediction is obtained by applying the second angular IPM on one or more reference samples on a second side of the block.

A 27th embodiment provide an apparatus for decoding an encoded data stream, the encoded data stream including data representing a picture, the apparatus comprising:

> a decoder module configured to decode from the encoded data stream the picture, and
> a prediction module, the prediction module including an apparatus according to the 26th embodiment.

A 28th embodiment provide an apparatus for encoding a picture into an encoded data stream, the encoded data stream including data representing the picture, the apparatus comprising:

> an encoder module configured to receive a picture and to encode the picture into the encoded data stream, and
> a prediction module, the prediction module including an apparatus according to the 26th embodiment.

A 29th embodiment provide a data stream having encoded thereinto a picture, wherein the data stream comprises: an indication, e.g., a flag or an index, the indication indicating

- that a block of the picture is predicted by combining a first prediction using a first angular intra prediction mode (IPM) and a second prediction using a second angular IPM are combined, wherein each angular IPM is mapped to an intra angle, the first angular IPM is associated with a first intra angle equal to or greater than 180° or equal to greater or less than 90°, and the second angular IPM is associated with a second intra angle shifted by a predefined angle relative to the first intra angle, and wherein, the first prediction is obtained by applying the first angular IPM on one or more reference samples on a first side of the block, and the second prediction is obtained by applying the second angular IPM on one or more reference samples on a second side of the block, and/or
- one or more parameters for combining the first prediction and the second prediction.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

## References

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541

[6] Algorithm description of Enhanced Compression Model 12 (ECM 12), https://jvet-experts.org/doc_end_user/current_document.php?id=13915

**Claims**

1. A method of processing one or more blocks of a picture, the method comprising:

   predicting a block of the picture by combining a first prediction using a first angular intra prediction mode (IPM) and a second prediction using a second angular IPM,
   wherein each angular IPM is mapped to an intra angle, the first angular IPM is associated with a first intra angle equal to or greater than 180° or equal to or less than 90°, and the second angular IPM is associated with a second intra angle shifted by a predefined angle relative to the first intra angle, and
   wherein the first prediction is obtained by applying the first angular IPM on one or more reference samples on a first side of the block, and the second prediction is obtained by applying the second angular IPM on one or more reference samples on a second side of the block.

2. The method of claim 1, wherein the method further comprises:

   - obtaining the first angular IPM associated with the first intra angle,
   - shifting the first intra angle by the predefined angle, e.g., by 180°, for obtaining the second intra angle, and
   - selecting an angular IPM associated with the second intra angle as the second angular IPM.

3. The method of any one of the preceding claims, wherein

   - when the block is not a wide angle block, like a square block, the first intra angle is equal to or greater than 180° and equal to or less than 225°, and the second intra angle is equal to or less than 45° and equal to or greater than 0°, and/or
   - when the block is a wide angle block, like a non-square block, the first intra angle is equal to or less than 45° and equal to or greater than 0°, and the second intra angle is equal to or greater than 180° and equal to or less than 225°.

4. The method of any one of the preceding claims, wherein

   - when the first intra angle is equal to or greater than 180°, the first side of the block is left of the block, and the second side is above the block, and/or
   - when the first intra angle equal to greater or less than 90°, the first side of the block is above the block, and the second side is left of the block.

5. The method of any one of the preceding claims, wherein the block has a width W and a height H, and

   - when the block is not a wide angle block, like a square block, a reference line including the reference samples on the first side has a length of W, and a reference line including the reference samples on the second side has a length of H, and/or
   - when the block is a wide angle block, like a non-square block, a reference line including the reference samples on the first side has a length of 2W+1, and a reference line including the reference samples on the second side has a length of 2H+1.

6. The method of any one of the preceding claims, wherein the first prediction and the second prediction are combined by fusing, wherein the first prediction and the second prediction are fused by a linear combination using

   - a block-level weighting applying the same fusion weights for all pixels within the block, or
   - a pixel-level weighting applying location-dependent fusion weights.

7. The method of claim 6, wherein

   when using the block-level weighting, a fusion function for a pixel position (x, y) is as follows:

$$Pred_f^{x,y} = \frac{\omega_s Pred_p^{x,y} + \omega_p Pred_s^{x,y}}{\omega_p + \omega_s},$$

with

$Pred_p^{x,y}$ first prediction of pixel position (x, y),

$Pred_s^{x,y}$ second prediction of pixel position (x, y),

$\omega_p$ fusion weight of the first prediction for the block including pixel position (x, y),

$\omega_s$ fusion weight of the second prediction for the block including pixel position (x, y), and

when using the pixel-level weighting, a fusion function for a pixel position (x, y) is as follows:

$$Pred_f^{x,y} = \frac{\omega_s^{x,y} Pred_p^{x,y} + \omega_p^{x,y} Pred_s^{x,y}}{\omega_p^{x,y} + \omega_s^{x,y}},$$

with

$Pred_p^{x,y}$ first prediction of pixel position (x, y),

$Pred_s^{x,y}$ second prediction of pixel position (x, y),

$\omega_p^{x,y}$ fusion weight of the first prediction for the pixel position (x, y),

$\omega_s^{x,y}$ fusion weight of the second prediction for the pixel position (x, y).

8. The method of claim 6 or 7, wherein the fusion weights are fixed.

9. The method of claim 6 or 7, wherein the fusion weights vary from one block to another block, and a change in the fusion weights may be determined by an explicit signaling using at least one syntax element signaled in a data stream to indicate how the weights are adapted, e.g., by signaling a syntax element indicating a relative weight of the first prediction to the second prediction.

10. The method of any one of claims 6 to 9, wherein the fusion weights vary from one block to another block, and wherein

- the fusion weight for the first prediction is determined using a distance between the first side of the block and the pixel position (x, y), and the fusion weight for the second prediction is determined using a distance between the second side of the block and the pixel position (x, y), or
- the fusion weights for the first prediction and for the second prediction are determined using template-based distortions of the first and second predictions.

11. The method of any one of the preceding claims, wherein predicting the block by combining the first prediction and the second prediction is enabled or disabled responsive to one or more of the following factors:

- an availability of a sufficient number of reference samples, wherein combining the first prediction and the second prediction is disabled when the number of reference samples on the first and/or second side of the block is below a predefined threshold,
- the first intra angle, wherein combining the first prediction and the second prediction is disabled when the first angular IPM is within a predefined range around a horizontal or vertical angular IPM,
- an aspect ratio of the block, wherein combining the first prediction and the second prediction is disabled when the aspect ratio of the block is below a predefined threshold, e.g., when the block is a thin rectangle.

12. The method of any one of the preceding claims, wherein predicting the block by combining the first prediction and the second prediction is controlled at one of a plurality of different processing levels.

13. The method of claim 12, wherein the plurality of different processing levels comprise:

- a sequence-level at which the prediction of the block by combining the first prediction and the second prediction is enabled/disabled for all coding units (CUs) in all coding tree units (CTUs) of all frames of a video content, e.g., responsive to a signaling using a High Level Syntax (HLS), like a Sequence Parameter Set, SPS, flag,
- a frame- or picture-level at which the prediction of the block by combining the first prediction and the second prediction is enabled/disabled for all coding units (CUs) of all coding tree units (CTUs) in the frame/picture, e.g., responsive to a signaling using a High Level Syntax (HLS), like a Sequence Parameter Set, SPS, flag,
- a block- or CU-level at which the prediction of the block by combining the first prediction and the second prediction is enabled/disabled for each individual coding unit (CU) or block.

14. A non-transitory computer-readable storage medium comprising instructions which, when executed by a computer, cause the computer to carry out the method of any one of the preceding claims.

15. An apparatus of processing one or more blocks of a picture, the apparatus comprising:

a processing module, wherein the processing module is configured to predict a block of the picture by combining a first prediction using a first angular intra prediction mode (IPM) and a second prediction using a second angular IPM,
wherein each angular IPM is mapped to an intra angle, the first angular IPM is associated with a first intra angle equal to or greater than 180° or equal to greater or less than 90°, and the second angular IPM is associated with a second intra angle shifted by a predefined angle relative to the first intra angle, and
wherein the first prediction is obtained by applying the first angular IPM on one or more reference samples on a first side of the block, and the second prediction is obtained by applying the second angular IPM on one or more reference samples on a second side of the block.

Fig. 1

Fig. 2

Fig. 3

Diag. mode    2W+1

Diag. mode    2W+1    45 deg

CU

Mode 66

2H+1

Range of intra
prediction angle

Mode 2

45 deg

CU

Mode 66

2H+1

Range of intra
prediction angle

Mode 2

(A)

(B)

Fig. 4

Fig. 5

(A)                                    (B)

Fig. 6

(C)

(D)

Fig. 6

predicting a block of the picture by combining a first prediction using a first angular intra prediction mode (IPM) and a second prediction using a second angular IPM

the first angular IPM is associated with a first intra angle equal to or greater than 180° or equal to or less than 90°

the second angular IPM is associated with a second intra angle shifted by a predefined angle relative to the first intra angle

the second prediction is obtained by applying the second angular IPM on one or more reference samples on a second side of the block

the first prediction is obtained by applying the first angular IPM on one or more reference samples on a first side of the block

S100

Fig. 7

$M_c$

Is block wide-angle?

Yes

No

$M_s$

$M_p$

$M_p$

$M_s$

Fig. 8

left reference line

above reference line

current CU

Is $M_p$ vertical?

Yes

No

$Ref_{main}$

$Ref_{side}$

$Ref_{side}$

current CU

$Ref_{main}$

current CU

Fig. 9

$Pred_p$

$M_p$ : IPM3 (Q$^1$)
$Ref_{main}$: left

$Pred_s$

$M_s$ : IPM3+180°= IPM67 (Q$^{wa2}$)
$Ref_{side}$: above

(A)

(B)

Fig. 10

Step 1 — determine the principal and shifted IPMs, $M_p$ and $M_s$, respectively

Step 2 — determine $Ref_{main}$ and $Ref_{side}$.

Step 3 — determine principal prediction signals $Pred_p$ by applying $M_p$ on $Ref_{main}$

Step 4 — determine secondary prediction signals $Pred_s$, by applying $M_s$ on $Ref_{side}$

Step 5 — the final prediction $Pred_f$ by applying a fusion of $Pred_p$ and $Pred_s$

Fig. 11

decoding from the encoded data stream the picture

predicting a block of the picture by combining a first prediction using a first angular intra prediction mode (IPM) and a second prediction using a second angular IPM

the first angular IPM is associated with a first intra angle equal to or greater than 180° or equal to or less than 90°

the second angular IPM is associated with a second intra angle shifted by a predefined angle relative to the first intra angle

the second prediction is obtained by applying the second angular IPM on one or more reference samples on a second side of the block

the first prediction is obtained by applying the first angular IPM on one or more reference samples on a first side of the block

S500

S502

Fig. 12

receiving an original picture — S600

encoding the picture into an encoded data stream

predicting a block of the picture by combining a first prediction using a first angular intra prediction mode (IPM) and a second prediction using a second angular IPM

the first angular IPM is associated with a first intra angle equal to or greater than 180° or equal to or less than 90° — S602

the second angular IPM is associated with a second intra angle shifted by a predefined angle relative to the first intra angle

the second prediction is obtained by applying the second angular IPM on one or more reference samples on a second side of the block — S604

the first prediction is obtained by applying the first angular IPM on one or more reference samples on a first side of the block

including into the data stream information regarding the use a combination the first and second predictions — S606

Fig. 13

Processing Module

predict a block of the picture by combining a first prediction using a first angular intra prediction mode (IPM) and a second prediction using a second angular IPM

the first angular IPM is associated with a first intra angle equal to or greater than 180° or equal to or less than 90°

402

the second angular IPM is associated with a second intra angle shifted by a predefined angle relative to the first intra angle

404

the second prediction is obtained by applying the second angular IPM on one or more reference samples on a second side of the block

the first prediction is obtained by applying the first angular IPM on one or more reference samples on a first side of the block

400

Fig. 14

Fig. 15

Encoder module

602

Processing module

604

600

Fig. 16

704

702

| | | | | | | | |
|---|---|---|---|---|---|---|---|

encoder ..... ..... decoder

600

700

500

Fig. 17

Fig. 18

Europäisches
Patentamt

European
Patent Office

Office européen
des brevets

## EUROPEAN SEARCH REPORT

**Application Number**

EP 24 31 5590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN H ET AL: "Description of SDR, HDR and 360° video coding technology proposal by Huawei, GoPro, HiSilicon, and Samsung "" general application scenario", 10. JVET MEETING; 10-4-2018 - 20-4-2018; SAN DIEGO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/, no. JVET-J0025-v4, 14 April 2018 (2018-04-14), XP030151192, * abstract * * pages 46-51, paragraph 3.1.3 - paragraph 3.1.3.4; figures 3-8, 3-13 * | 1-15 | INV. H04N19/105 H04N19/11 H04N19/176 H04N19/593 |
| X | SHIODERA T ET AL: "Bidirectional intra prediction", 31. VCEG MEETING; 79. MPEG MEETING; 15-01-2007 - 16-01-2007;MARRAKECH; (VIDEO CODING EXPERTS GROUP OF ITU-T SG.16), no. VCEG-AE14; VCEG-AE14, 14 January 2007 (2007-01-14), XP030003517, | 1,2,14, 15 | |
| A | * the whole document * | 3-13 | **TECHNICAL FIELDS SEARCHED (IPC)** H04N |
| A | PFAFF JONATHAN ET AL: "Intra Prediction and Mode Coding in VVC", IEEE TRANSACTIONS ON CIRCUITS AND SYSTEMS FOR VIDEO TECHNOLOGY, IEEE, USA, vol. 31, no. 10, 12 April 2021 (2021-04-12), pages 3834-3847, XP011880567, ISSN: 1051-8215, DOI: 10.1109/TCSVT.2021.3072430 [retrieved on 2021-09-30] * page 3835 - page 3837, paragraphs IV.A, IV.B; figure 1; table I * | 1-15 | |

-/--

The present search report has been drawn up for all claims

| Place of search | Date of completion of the search | Examiner |
|---|---|---|
| Munich | 15 May 2025 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 31 5590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHANG (OPPO) L ET AL: "Non-EE2: Intra Template-Matching Prediction Fusion", 29. JVET MEETING; 20230111 - 20230120; TELECONFERENCE; (THE JOINT VIDEO EXPLORATION TEAM OF ISO/IEC JTC1/SC29/WG11 AND ITU-T SG.16) , no. JVET-AC0069 ; m61638 13 January 2023 (2023-01-13), XP030306546, Retrieved from the Internet: URL:https://jvet-experts.org/doc_end_user/ documents/29_Teleconference/wg11/JVET-AC00 69-v2.zip JVET-AC0069-v2_clean.docx [retrieved on 2023-01-13] * the whole document * | 1-15 | |
| A | Wien Mathias: "Chapter 6: Intra Prediction" In: "High Efficiency Video Coding - Coding Tools and Specification", 8 October 2014 (2014-10-08), Springer-Verlag, Berlin Heidelberg, XP093033033, pages 161-177, DOI: 10.1007/978-3-662-44276-0, * pages 163-172, paragraph 6.2 - paragraph 6.5.3 * | 1-15 | |

**TECHNICAL FIELDS SEARCHED (IPC)**

The present search report has been drawn up for all claims

| Place of search | Date of completion of the search | Examiner |
|---|---|---|
| Munich | 15 May 2025 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)